# EUROPÄISCHE PATENTSCHRIFT

(11) **EP 3 362 674 B1**
(45) Veröffentlichungstag und Bekanntmachung des Hinweises auf die Patenterteilung: **09.10.2019**
(21) Anmeldenummer: 16753634.1
(22) Anmeldetag: 11.08.2016
(51) Int. Cl.: F02M 55/02, F02M 63/00, F02M 63/02, F16K 15/04

(54) **DURCHFLUSSBEGRENZER FÜR EINEN INJEKTOR**
FLOW RESTRICTOR FOR AN INJECTOR
LIMITEUR DE DÉBIT POUR UN INJECTEUR

(30) Priorität: 15.10.2015 DE 102015220028
(43) Veröffentlichungstag der Anmeldung: 22.08.2018
(73) Patentinhaber: Robert Bosch GmbH, 70442 Stuttgart (DE)
(72) Erfinder: BLATTERER, Dieter, 4470 Enns (AT)
(86) Internationale Anmeldenummer: PCT/EP2016/069132
(87) Internationale Veröffentlichungsnummer: WO 2017/063774

(56) Entgegenhaltungen:
- EP-A1- 2 662 557
- WO-A1-2013/152966
- DE-A1-102014 111 202

## Beschreibung

Die Erfindung betrifft einen Durchflussbegrenzer für einen Injektor eines Common-Rail-Kraftstoffeinspritzsystems, insbesondere eines modularen Common-Rail-Kraftstoffeinspritzsystems.

### Stand der Technik

Modulare Common-Rail-Kraftstoffeinspritzsysteme für Brennkraftmaschinen zeichnen sich dadurch aus, dass ein Teil des im System vorhandenen Speichervolumens im Injektor selbst vorhanden ist. Modulare Common-Rail-Systeme kommen bei besonders großen Motoren zum Einsatz, bei welchen die einzelnen Injektoren unter Umständen in erheblichem Abstand voneinander angebracht sind. Die alleinige Verwendung eines gemeinsamen Rails für alle Injektoren ist bei solchen Motoren nicht sinnvoll, da es aufgrund der langen Leitungen während der Einspritzung zu einem massiven Einbruch im Einspritzdruck kommen würde, so dass bei längerer Einspritzdauer die Einspritzrate merklich einbrechen würde. Bei solchen Motoren ist es daher vorgesehen, einen Hochdruckspeicher im Inneren eines jeden Injektors anzuordnen. Eine solche Bauweise wird als modularer Aufbau bezeichnet, da jeder einzelne Injektor über seinen eigenen Hochdruckspeicher verfügt und somit als eigenständiges Modul eingesetzt werden kann. Unter einem Hochdruckspeicher ist hierbei nicht eine gewöhnliche Leitung zu verstehen, sondern es handelt sich um ein druckfestes Gefäß mit einer Zu- bzw. Ableitung, dessen Durchmesser im Vergleich zu den Hochdruckleitungen deutlich vergrößert ist, damit aus dem Hochdruckspeicher eine gewisse Einspritzmenge abgegeben werden kann, ohne dass es zu einem sofortigen Druckabfall kommt.

Injektoren von modularen Common-Rail-Systemen wird Hochdruckkraftstoff aus einer Hochdruckpumpe zugeführt, wobei die Zuführung meist über eine Öffnung des Injektors an der Oberseite des Hochdruckspeichers (sogenannter Top feed) erfolgt; alternativ kann die Zuführung auch seitlich angebracht sein (Side feed). Der Anschluss der den Hochdruckkraftstoff führenden Hochdruckleitung an den Injektor erfolgt dabei über einen mit einem Hochdruckanschluss versehenen Verschlussbolzen eines Durchflussbegrenzers. Der Verschlussbolzen hat in der Regel die weitere Funktion, den Kraftstoff für die benachbarten Injektoren durchzuleiten, zu welchem Zweck ein zweiter Hochdruckanschluss vorgesehen ist.

Der Durchflussbegrenzer trennt den Injektor bei zu hoher Durchflussmenge vom Hochdruckkraftstoffzufluss, um eine Dauereinspritzung des Injektors in den Brennraum der Brennkraftmaschine zu vermeiden. Ein derartiger Durchflussbegrenzer ist beispielsweise aus der EP 2 662 557 A1 oder der WO2013152966 A1 bekannt.

Der bekannte Durchflussbegrenzer für einen Injektor eines Common-Rail-Kraftstoffeinspritzsystems weist einen Verschlussbolzen mit einem Hochdruckanschluss, ein Ventilgehäuse, eine Kugel und eine Feder auf. An dem Verschlussbolzen ist ein Auflagesitz ausgebildet und an dem Ventilgehäuse ein Ventilsitz. Die Kugel ist in einer in dem Ventilgehäuse ausgebildeten Axialbohrung angeordnet und durch die Feder in Richtung des Auflagesitzes beaufschlagt. Die Kugel gibt bei Anlage an dem Auflagesitz eine hydraulische Verbindung von dem Hochdruckanschluss durch die Axialbohrung frei, und bei Anlage an dem Ventilsitz sperrt sie die hydraulische Verbindung. Im montierten Zustand des Durchflussbegrenzers mündet die hydraulische Verbindung stromabwärts in einen Hochdruckspeicher des Injektors.

Im Betrieb des Injektors kommt es zu vielfach wiederholtem Kontakt zwischen der Kugel und dem Auflagesitz und dementsprechend auch zu Verschleiß. Bei Anlage der Kugel an dem Auflagesitz muss die hydraulische Verbindung geöffnet bleiben; dies wird beispielsweise durch Nuten bzw. Taschen in der Axialbohrung sichergestellt. Dadurch ist die Kontur des Auflagesitzes sehr scharfkantig und somit auch verschleißanfällig gestaltet.

### Offenbarung

Demgegenüber weist der erfindungsgemäße Durchflussbegrenzer ein besseres Verschleißverhalten auf, weil die Kontaktdruckspitzen zwischen Kugel und Auflagesitz reduziert sind. Die Lebensdauer des Durchflussbegrenzers wird dadurch erhöht. Weiterhin werden Funktionsstörungen durch Verschleißpartikel am Durchflussbegrenzer bzw. am Injektor vermieden.

Dazu umfasst der Durchflussbegrenzer einen Verschlussbolzen mit einem Hochdruckanschluss, ein Ventilgehäuse, eine Kugel und eine Feder. An dem Verschlussbolzen ist ein Auflagesitz ausgebildet und an dem Ventilgehäuse ein Ventilsitz. Die Kugel ist in einer in dem Ventilgehäuse ausgebildeten Axialbohrung angeordnet und durch die Feder in Richtung des Auflagesitzes beaufschlagt. Die Kugel gibt bei Anlage an dem Auflagesitz eine hydraulische Verbindung von dem Hochdruckanschluss durch die Axialbohrung frei, und bei Anlage an dem Ventilsitz sperrt sie die hydraulische Verbindung. Der Auflagesitz weist erfindungsgemäß eine ovale Kontur auf.

Durch die ovale Kontur sind die Kontaktdruckspitzen zwischen Kugel und Auflagesitz reduziert. Gleichzeitig bleibt die hydraulische Verbindung durch die Axialbohrung bei Anlage der Kugel an den Auflagesitz geöffnet, so dass eine Bypassfunktion erfüllt ist. Zusätzlich ist die ovale Kontur einfacher zu fertigen, beispielsweise durch Erosion oder Laserbearbeitung, als eine kreisförmige Bohrung mit Taschen bzw. Nuten.

Vorteilhafterweise weist der Auflagesitz eine elliptische Kontur auf. Dadurch werden die Kontaktdruckspitzen zwischen Kugel und Auflagesitz bestmöglich minimiert.

In vorteilhaften Ausführungen ist in dem Verschlussbolzen eine Hochdruckbohrung ausgebildet, wobei die Hochdruckbohrung in den Auflagesitz mündet und eine elliptische Kontur aufweist. Dadurch wird der Auflagesitz durch die elliptische Hochdruckbohrung begrenzt bzw. stellt eine Kante dieser Hochdruckbohrung dar. Vorzugsweise wird die Hochdruckbohrung durch Erosion oder Laserbearbeitung gefertigt, so dass auf einfache Weise die elliptische Kontur des Auflagesitzes gefertigt wird.

In einer vorteilhaften Weiterbildung ist die Feder in der Axialbohrung angeordnet. Dadurch ist der Durchflussbegrenzer besonders kompakt und bauraumsparend ausgeführt. Vorzugsweise stützt sich die Feder dabei an einer Schulter der Axialbohrung ab.

Die Erfindung umfasst weiterhin einen Injektor zum Einspritzen von Kraftstoff in den Brennraum einer Brennkraftmaschine, wobei der Injektor einen Injektorkörper und einen Durchflussbegrenzer wie oben beschrieben aufweist. Der Durchflussbegrenzer ist dabei mit dem Injektorkörper verbunden, beispielsweise verspannt. Dadurch wird eine Dauereinspritzung vom Injektor in den Brennraum verhindert, was ein sehr hohes Sicherheitsrisiko darstellen würde.

In einer vorteilhaften Weiterbildung ist das Ventilgehäuse zwischen dem Injektorkörper und dem Verschlussbolzen mittels einer Spannmutter verspannt, vorzugsweise mediendicht. So ist die Verbindung zwischen Durchflussbegrenzer und Injektor kompakt ausgeführt. Gleichzeitig dichtet das Ventilgehäuse diese Verbindung ab, so dass kein Kraftstoff an die Umgebung gelangen kann.

In vorteilhaften Ausführungen ist in dem Injektorkörper ein Hochdruckspeicher ausgebildet, wobei die Axialbohrung hydraulisch mit dem Hochdruckspeicher verbunden ist. Speziell bei großen Brennkraftmaschinen ist es von Vorteil einen Hochdruckspeicher direkt im Injektor anzuordnen, um genügend Kraftstoff für die Einspritzung zur Verfügung zu haben. Lange Strömungswege werden dadurch verhindert und ein zu großer Druckabfall des Kraftstoffs während der Einspritzung vermieden.

In vorteilhaften Weiterbildungen ist die Axialbohrung unter Zwischenschaltung einer Drossel mit dem Hochdruckspeicher verbunden. Um während der Einspritzung von Kraftstoff in den Brennraum der Brennkraftmaschine ein Nachströmen von Kraftstoff in den Hochdruckspeicher zu ermöglichen und um eine gegenseitige Beeinflussung des Einspritzdrucks oder der Einspritzmenge der einzelnen Injektoren zu verhindern, ist es vorgesehen, dass die Axialbohrung über die vorzugsweise in dem Ventilgehäuse ausgebildete Drossel in den Injektor mündet. Die Anordnung der Drossel in dem Ventilgehäuse bringt zudem den Vorteil mit sich, dass eine Anpassung des Drosselquerschnitts an die jeweiligen Bedürfnisse des Kraftstoffeinspritzsystems in einfacher Weise durch Austausch des Ventilgehäuses gelingt, ohne dass hierfür weitere Bauteile ersetzt werden müsste.

Bevorzugt ist weiterhin in dem Ventilgehäuse ein Stabfilter angeordnet, der grobe Partikel aus dem Kraftstoff zurückhält.

Die Erfindung wird nachfolgend anhand von Zeichnungen näher erläutert. Diese zeigen in:
**Fig. 1** eine Ausführung des Durchflussbegrenzers im Längsschnitt,
**Fig. 2a** den Schnitt A-A der **Fig. 1** nach dem Stand der Technik,
**Fig. 2b** den Schnitt A-A der **Fig. 1** des erfindungsgemäßen Durchflussbegrenzers.

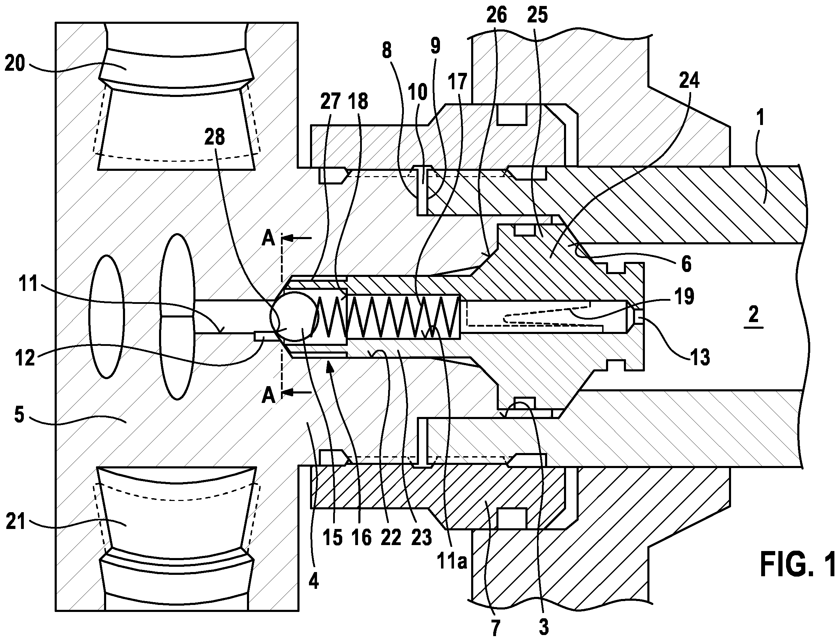

In **Fig. 1** ist ein Endabschnitt eines Injektorkörpers 1 eines Injektors dargestellt, in dem ein Hochdruckspeicher 2 integriert ist. Der Injektorkörper 1 kann auch als Haltekörper bezeichnet werden. Der Injektor weist einen Durchflussbegrenzer 16 auf, wobei der Durchflussbegrenzer 16 ein Ventilgehäuse 24, eine im Ventilgehäuse 24 ausgebildete Axialbohrung 11a, eine als Schließkörper dienende und in der Axialbohrung 11a angeordnete Kugel 15, einen am Ventilgehäuse 24 ausgebildeten Ventilsitz 18 und einen Auflagesitz 28 umfasst.

Der Injektor- bzw. Haltekörper 1 weist eine zum Hochdruckspeicher 2 führende Öffnung 3 auf, in die ein bolzenartiger Abschnitt 4 eines Verschlussbolzens 5 eingeführt ist. Der Verschlussbolzen 5 ist mittels einer Spannmutter 7 mit dem Injektorkörper 1 verschraubt, wobei die Spannmutter 7 mit ihrem Innengewinde mit axial aneinander anschließenden Außengewinden des Injektorkörpers 1 und des Verschlussbolzens 5 zusammenwirkt.

In dem Verschlussbolzen 5 sind ein Hochdruckanschluss 20 und ein weiterer Hochdruckanschluss 21 ausgebildet. An den Hochdruckanschluss 20 ist eine nicht näher dargestellte Leitung angeschlossen, über welche die Zufuhr von Hochdruckkraftstoff von einer nicht dargestellten Hochdruckpumpe erfolgt. Über den weiteren Hochdruckanschluss 21 kann eine Verbindung zu einem nachfolgenden Injektor hergestellt werden. Weiterhin ist in dem Verschlussbolzen 5 eine Hochdruckbohrung 11 ausgebildet, die mit den Hochdruckanschlüssen 20, 21 hydraulisch verbunden ist und in Richtung des Injektorkörpers 1 führt. Die Hochdruckbohrung 11 weist Taschen 12 auf, die nicht über den gesamten Umfang der Hochdruckbohrung 11 verlaufen.

Der bolzenartige Abschnitt 4 des Verschlussbolzens 5 weist eine Aufnahmebohrung 22 auf, in die ein axialer Abschnitt 23 des Ventilgehäuses 24 aufgenommen ist. Das Ventilgehäuse 24 weist eine Schulter 25 auf, an der in Richtung des Injektorkörpers 1 eine konische Dichtfläche 6 und in Richtung des Verschlussbolzens 5 eine konische weitere Dichtfläche 26 ausgebildet sind. Die Dichtfläche 6 wirkt mit einer entsprechenden Gegenfläche am Rand der Öffnung 3 des Injektorkörpers zusammen. Die konische weitere Dichtfläche 26 wirkt mit einer kegeligen Gegenfläche des bolzenartigen Abschnitts 4 zusammen. Dies führt dazu, dass das Verschrauben des Verschlussbolzens 5 mittels der Spannmutter 7 gleichzeitig eine Dichtkraft an der Dichtfläche 6 und an der weiteren Dichtfläche 26 erzeugt. Durch die Spannmutter 7 wird so die erforderliche Haltekraft bzw. Dichtkraft eingestellt. Zwischen einer Schulter 8 des Verschlussbolzens 5 und einer ringförmigen Stirnfläche 9 des Injektorkörpers 1 ist ein Spalt 10 vorgesehen, um eine Doppelpassung zu vermeiden.

In dem Ventilgehäuse 24 ist die Axialbohrung 11a ausgebildet, welche in die Hochdruckbohrung 11 mündet, wobei die Verbindung durch die Kugel 15 verschließbar ist. In der Axialbohrung 11a sind ein Stabfilter 19 angeordnet und eine Drossel 13 ausgebildet. Die Axialbohrung 11a ist über die Drossel 13 mit dem Hochdruckspeicher 2 hydraulisch verbindbar, wobei der Stabfilter 19 stromaufwärts der Drossel 13 angeordnet ist.

In der Axialbohrung 11a ist weiterhin in Richtung der Hochdruckbohrung 11 die Kugel 15 angeordnet. Die Kugel 15 wird mittels einer in der Axialbohrung 11a angeordneten Feder 17 in Richtung zur Hochdruckbohrung 11 beaufschlagt, so dass sie mit dem an dem Verschlussbolzen 5 bzw. an dem bolzenartigen Abschnitt 4 ausgebildeten Auflagesitz 28 zusammenwirkt. Die Feder 17 stützt sich dazu an einem Absatz der Axialbohrung 11a ab.

Eine Auflagefläche 28a ist an dem Verschlussbolzen 5 ausgebildet und die Hochdruckbohrung 11 ringförmig umgebend angeordnet. Der Auflagesitz 28 wird so an dem Übergang der Auflagefläche 28a zu der Hochdruckbohrung 11 gebildet, wobei sich die Auflagefläche 28a in Richtung der Hochdruckbohrung 11 verjüngt.

An dem axialen Abschnitt 23 ist gegenüberliegend zur Auflagefläche 28a der Ventilsitz 18 ausgebildet, der mit der Kugel 15 zusammenwirkt. Die Kugel 15 kann so zwischen dem Auflagesitz 28 und dem Ventilsitz 18 bewegt werden.

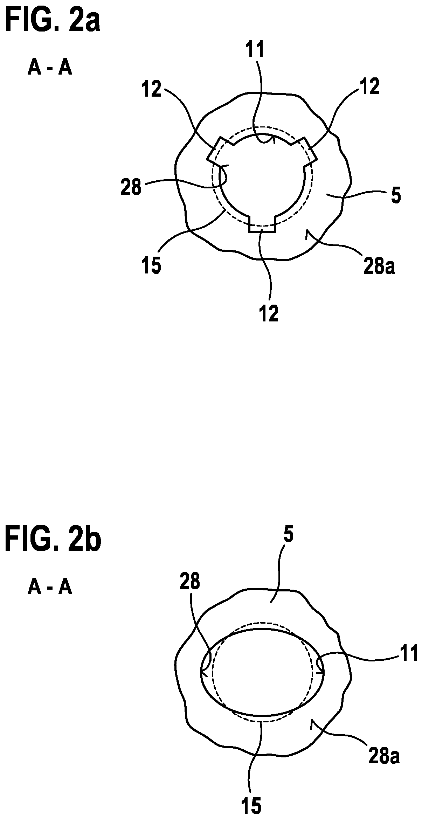

Liegt die Kugel 15 an dem Auflagesitz 28 an, so ist die hydraulische Verbindung durch die Axialbohrung 11a - also zwischen der Hochdruckbohrung 11 und dem Hochdruckspeicher 2 - geöffnet. Liegt die Kugel an dem Ventilsitz 18 an, so verschließt sie die hydraulische Verbindung durch die Axialbohrung 11a. Die Ausgestaltung der hydraulischen Verbindung durch die Auflagefläche 28a bzw. den Auflagesitz 28 wird dabei noch näher in den Figuren 2a und 2b dargestellt.

Die Stirnfläche des axialen Abschnitts 23 des Ventilgehäuses 24 endet in Abstand vor der am Übergang der Aufnahmebohrung 22 in die Hochdruckbohrung 11 vorgesehenen ringförmigen Auflagefläche 28. Weiterhin ist der in der Aufnahmebohrung 22 aufgenommene axiale Abschnitt 23 in seinem vorderen Bereich 27 mit einem verringerten Außendurchmesser ausgebildet, sodass in dem hierdurch entstehenden Ringspalt zwischen dem Außenumfang des vorderen Bereichs 27 des axialen Abschnitts 23 und der Aufnahmebohrung 22 der Druck des Hochdruckkraftstoffs von außen auf den vorderen Bereich 27 zur Wirkung gelangen kann. Dies führt zu einem druckausgeglichenen vorderen Bereich 27, so dass die Schwingbelastung verringert wird.

Die **Figuren 2a und 2b** zeigen den Schnitt A-A der **Fig**.**1**, wobei die **Fig.2a** die Ausbildung nach dem Stand der Technik zeigt und die **Fig.2b** die erfindungsgemäße Ausbildung.

Die **Fig.2a** zeigt die Ausbildung von drei Taschen 12 in dem Verschlussbolzen 5 als radiale Erweiterung der Hochdruckbohrung 11. Die Auflagefläche 28a ist so durch die Kontur der Taschen 12 und der Hochdruckbohrung 11 begrenzt und bildet zusammen mit diesen den Auflagesitz 28. Liegt die Kugel 15 an dem Auflagesitz 28 an, so führt die hydraulische Verbindung zwischen der Hochdruckbohrung 11 und dem Hochdruckspeicher 2 über die Taschen 12; Kraftstoff kann somit in den Hochdruckspeicher 2 nachströmen, da die Taschen 12 eine Bypassfunktion erfüllen.

In der erfindungsgemäßen Ausbildung der **Fig.2b** weist die Hochdruckbohrung 11 keine Taschen 12 auf, sondern stattdessen einen elliptischen Querschnitt; demzufolge weist auch der Auflagesitz 28 eine elliptische Kontur auf, welcher durch eine Kante der Hochdruckbohrung 11 gebildet wird. So ist auch hier bei Anlage der Kugel 15 an den Auflagesitz 28 die hydraulische Verbindung zwischen der Hochdruckbohrung 11 und dem Hochdruckspeicher 2 geöffnet, da die Kugel 15 die Ellipse nicht vollständig verschließen kann; die Bypassfunktion bleibt so erhalten. Alternativ zu der elliptischen Kontur des Auflagesitzes 28 ist auch eine ovale Kontur möglich.

Die Funktion des Durchflussbegrenzers 16 ist wie folgt: Bei Common-Rail-Systemen können unter ungünstigen Umständen Leckagen auftreten, sei es im Leitungssystem oder durch defekte Injektoren. Ein Injektor weist eine Düsennadel auf, die die Einspritzöffnungen des Injektors in den Brennraum der Brennkraftmaschine öffnet und schließt. Ein Injektor mit einer klemmenden Düsennadel, die zu Dauereinspritzungen in den Brennraum führt, kann erhebliche Schäden verursachen. Diese Schäden können zum Brand des Fahrzeuges oder zur Zerstörung des Motors führen. Durchflussmengenbegrenzer mit Schließfunktion dienen der Vermeidung dieser Gefahren, die bei Überschreiten einer maximalen Entnahmemenge aus dem Hochdruckspeicher 2 den Zulauf zu dem betroffenen Injektor verschließen und damit den einspritzpumpenseitigen Hochdruck von der Einspritzventilseite bzw. Düsennadelseite abkoppeln.

Im Betriebszustand des Injektors wird die Kugel 15 in der Axialbohrung 11a auf die Auflagefläche 28a, genauer in den Auflagesitz 28 gedrückt; die hydraulische Verbindung durch die Axialbohrung 11a zwischen der Hochdruckbohrung 11 und dem Hochdruckspeicher 2 ist aufgrund des ovalen Querschnitts der Hochdruckbohrung 11 bzw. des Auflagesitzes 28 geöffnet. Im Betrieb bewegt sich die Kugel 15 durch die während der Einspritzung entstehende Strömung auf Grund des Druckunterschiedes bei Kugelumströmung in Richtung des Ventilsitzes 18. Sinkt der Druck im Hochdruckspeicher 2 aufgrund Leckage oder sonstiger Fehlfunktion zu stark ab, entsteht an der Kugel 15 ein zu großer Druckunterschied zwischen der Seite zur Hochdruckbohrung 11 und der Seite zur Axialbohrung 11a. Bei zu großem Druckunterschied bzw. bei Überschreiten einer maximalen Einspritzmenge geht die Kugel 15 in den Ventilsitz 18 und verschließt so die hydraulische Verbindung von der Hochdruckbohrung 11 zu dem Hochdruckspeicher 2; dadurch wird eine weitere Strömung in den Injektor verhindert, wodurch eine Dauereinspritzung verhindert wird.

Durch die ovale, insbesondere elliptische, Form der Hochdruckbohrung 11 bzw. des Auflagesitzes 28 gibt es im Kontakt zwischen Kugel 5 und Auflagefläche 28a an dem Auflagesitz 28 keine scharfen Kanten mehr, gleichzeitig bleibt die Bypassfunktion jedoch erhalten. Kontaktdruckspitzen zwischen Auflagesitz 28 und Kugel 15 werden so vermieden und die Dauerfestigkeit und damit auch die Funktionsfähigkeit des Durchflussbegrenzers 16 und mit diesem auch des gesamten Injektors erhöht.

## Patentansprüche

1. Durchflussbegrenzer (16) für einen Injektor eines Common-Rail-Kraftstoffeinspritzsystems, wobei der Durchflussbegrenzer (16) einen Verschlussbolzen (5) mit einem Hochdruckanschluss (20), ein Ventilgehäuse (24), eine Kugel (15) und eine Feder (17) aufweist, wobei an dem Verschlussbolzen (5) ein Auflagesitz (28) ausgebildet ist, wobei an dem Ventilgehäuse (24) ein Ventilsitz (18) ausgebildet ist, wobei die Kugel (15) in einer in dem Ventilgehäuse (24) ausgebildeten Axialbohrung (11a) angeordnet und durch die Feder (17) in Richtung des Auflagesitzes (28) beaufschlagt ist, wobei die Kugel (15) bei Anlage an dem Auflagesitz (28) eine hydraulische Verbindung von dem Hochdruckanschluss (20) durch die Axialbohrung (11a) freigibt und bei Anlage an dem Ventilsitz (18) die hydraulische Verbindung sperrt,
**dadurch gekennzeichnet, dass** der Auflagesitz (28) eine ovale Kontur aufweist, so dass die Kugel (15) die ovale Kontur nicht vollständig verschließen kann und so eine Bypassfunktion erfüllt.

2. Durchflussbegrenzer (16) nach Anspruch 1, **dadurch gekennzeichnet, dass** der Auflagesitz (28) eine elliptische Kontur aufweist.

3. Durchflussbegrenzer (16) nach Anspruch 2, **dadurch gekennzeichnet, dass** in dem Verschlussbolzen (5) eine Hochdruckbohrung (11) ausgebildet ist, wobei die Hochdruckbohrung (11) in den Auflagesitz (28) mündet und eine elliptische Kontur aufweist.

4. Durchflussbegrenzer (16) nach einem der Ansprüche 1 bis 3, **dadurch gekennzeichnet, dass** die Feder (17) in der Axialbohrung (11a) angeordnet ist.

5. Injektor zum Einspritzen von Kraftstoff in den Brennraum einer Brennkraftmaschine, wobei der Injektor einen Injektorkörper (1) und einen Durchflussbegrenzer (16) nach einem der Ansprüche 1 bis 4 aufweist, wobei der Durchflussbegrenzer (16) mit dem Injektorkörper (1) verbunden ist.

6. Injektor nach Anspruch 5, **dadurch gekennzeichnet, dass** das Ventilgehäuse (24) zwischen dem Injektorkörper (1) und dem Verschlussbolzen (5) mittels einer Spannmutter (7) verspannt ist.

7. Injektor nach einem der Ansprüche 5 oder 6, **dadurch gekennzeichnet, dass** in dem Injektorkörper (1) ein Hochdruckspeicher (2) ausgebildet ist, wobei die Axialbohrung (11a) hydraulisch mit dem Hochdruckspeicher (2) verbunden ist.

8. Injektor nach Anspruch 7, **dadurch gekennzeichnet, dass** die Axialbohrung (11a) unter Zwischenschaltung einer Drossel (13) mit dem Hochdruckspeicher (2) verbunden ist.

## Claims

1. Flow restrictor (16) for an injector of a common rail fuel injection system, wherein the flow restrictor (16) comprises a closure bolt (5) having a high-pressure connection (20), a valve housing (24), a ball (15) and a spring (17), wherein a contact seat (28) is formed on the closure bolt (5), wherein a valve seat (18) is formed on the valve housing (24), wherein the ball (15) is located in an axial bore (11a) formed in the valve housing (24) and is acted upon by the spring (17) in the direction of the contact seat (28), wherein the ball (15), when it rests on the contact seat (28), opens a hydraulic connection from the high-pressure connection (20) through the axial bore (11a), and when it rests on the valve seat (18) blocks the hydraulic connection, **characterized in that** the contact seat (28) has an oval contour, so that the ball (15) is unable to close the oval contour completely and thus fulfils a bypass function.

2. Flow restrictor (16) according to Claim 1, **characterized in that** the contact seat (28) has an elliptical contour.

3. Flow restrictor (16) according to Claim 2, **characterized in that** a high-pressure bore (11) is formed in the closure bolt (5), wherein the high-pressure bore (11) opens into the contact seat (28) and has an elliptical contour.

4. Flow restrictor (16) according to one of Claims 1 to 3, **characterized in that** the spring (17) is arranged in the axial bore (11a).

5. Injector for injecting fuel into the combustion chamber of an internal combustion engine, wherein the injector comprises an injector body (1) and a flow restrictor (16) according to one of Claims 1 to 4, wherein the flow restrictor (16) is connected to the injector body (1).

6. Injector according to Claim 5, **characterized in that** the valve housing (24) is clamped between the injector body (1) and the closure bolt (5) by means of a clamping nut (7).

7. Injector according to Claim 5 or 6, **characterized in that** a high-pressure accumulator (2) is formed in the injector body (1), wherein the axial bore (11a) is hydraulically connected to the high-pressure accumulator (2).

8. Injector according to Claim 7, **characterized in that** the axial bore (11a) is connected to the high-pressure accumulator (2) by way of a restriction (13).

## Revendications

1. Limiteur de débit (16) pour un injecteur d'un système d'injection de carburant à rampe commune, dans lequel le limiteur de débit (16) présente un boulon de fermeture (5) avec un raccord haute pression (20), un corps de soupape (24), une bille (15) et un ressort (17), dans lequel un siège d'appui (28) est formé sur le boulon de fermeture (5), dans lequel un siège de soupape (18) est formé sur le corps de soupape (24), dans lequel la bille (15) est disposée dans un alésage axial (11a) formé dans le corps de soupape (24) et est poussée par le ressort (17) en direction du siège d'appui (28), dans lequel la bille (15) libère lorsqu'elle est appuyée sur le siège d'appui (28) une liaison hydraulique depuis le raccord haute pression (20) à travers l'alésage axial (11a) et ferme la liaison hydraulique lorsqu'elle est appuyée sur le siège de soupape (18), **caractérisé en ce que** le siège d'appui (28) présente un contour ovale, de telle manière que la bille (15) ne puisse pas fermer complètement le contour ovale et remplisse ainsi une fonction de contournement.

2. Limiteur de débit (16) selon la revendication 1, **caractérisé en ce que** le siège d'appui (28) présente un contour elliptique.

3. Limiteur de débit (16) selon la revendication 2, **caractérisé en ce qu'**un alésage haute pression (11) est formé dans le boulon de fermeture (5), dans lequel l'alésage haute pression (11) débouche dans le siège d'appui (28) et présente un contour elliptique.

4. Limiteur de débit (16) selon l'une quelconque des revendications 1 à 3, **caractérisé en ce que** le ressort (17) est disposé dans l'alésage axial (11a).

5. Injecteur destiné à injecter du carburant dans la chambre de combustion d'un moteur à combustion interne, dans lequel l'injecteur présente un corps d'injecteur (1) et un limiteur de débit (16) selon l'une quelconque des revendications 1 à 4, dans lequel le limiteur de débit (16) est assemblé au corps d'injecteur (1).

6. Injecteur selon la revendication 5, **caractérisé en ce que** le corps de soupape (24) est serré entre le corps d'injecteur (1) et le boulon de fermeture (5) au moyen d'un écrou de serrage (7).

7. Injecteur selon une des revendications 5 ou 6, **caractérisé en ce qu'**un réservoir haute pression (2) est formé dans le corps d'injecteur (1), dans lequel l'alésage axial (11a) est hydrauliquement relié au réservoir haute pression (2).

8. Injecteur selon la revendication 7, **caractérisé en ce que** l'alésage axial (11a) est relié au réservoir haute pression (2) avec interposition d'un étranglement (13).
